# FASCICULE DE BREVET EUROPEEN

(11) **EP 1 100 346 B1**
(45) Date de publication et mention de la délivrance du brevet: **12.03.2003**
(21) Numéro de dépôt: 99932918.8
(22) Date de dépôt: 20.07.1999
(51) Int. Cl.: A23L 1/31, A23L 1/317

(54) **PROCEDE POUR LA PREPARATION D'UNE VIANDE RESTRUCTUREE PRESENTANT UNE STRUCTURE FEUILLETEE**
VERFAHREN ZUR HERSTELLUNG VON UMSTRUKTURIERTEM FLEISCH MIT EINER MEHRSCHICHTIGEN STRUKTUR
METHOD FOR PREPARING RESTRUCTURED MEAT HAVING A FOLIATE STRUCTURE

(30) Priorité: 24.07.1998 FR 9809596
(43) Date de publication de la demande: 23.05.2001
(73) Titulaire: Europeenne de Croissance et d'actions ECA, 49610 Murs Erigne (FR)
(72) Inventeur: FRADIN, Maurice, 85160 St Jean de Monts (FR); FRADIN, Christian, 85160 St Jean de Monts (FR)
(74) Mandataire: Dawidowicz, Armand
(86) Numéro de dépôt international: FR9901771
(87) Numéro de publication internationale: WO00004795

(56) Documents cités:
- WO-A-87/05190
- WO-A-93/14648
- FR-A- 2 683 124
- US-A- 4 927 661
- RAHARJO S ET AL: "Quality characteristics of restructured beef steaks manufactured by various techniques." JOURNAL OF FOOD SCIENCE, vol. 60, no. 1, 1995, pages 68-71, XP002097704 Correspondence (Reprint) address, D. R. Dexter, Dep. of Animal Sci., Colorado State Univ., Fort Collins, CO 80523, USA

## Description

La présente invention concerne un procédé pour la préparation d'une viande restructurée présentant une structure feuilletée.

Elle a plus particulièrement pour but, mais non exclusivement, un procédé visant à reconstituer des portions de viande, telles que biftecks, rôtis, escalopes ou similaires, ayant un aspect avant cuisson, une tenue et des propriétés organoleptiques aussi proches que possible de celles du muscle naturel, à partir d'une division des muscles suivie d'opérations de mélange et de mise en forme des produits de cette division avec des additifs éventuels.

Les études conduites par le demandeur et qui ont donné lieu au dépôt de la demande de brevet WO 8705190 A, avaient jusqu'ici montré qu'un tel résultat était obtenu si le procédé de restructuration confère au produit final une structure composée de feuilles ultrafines de moyenne surface, adhérant entre elles d'une manière plus ou moins régulière qui conserve la texture feuilletée.

La solution qui semblait s'imposer alors consistait en un procédé comprenant les phases opératoires suivantes :
- la fragmentation d'un muscle, de préférence chaud (c'est-à-dire prélevé ante rigor mortis) en lanières ou morceaux allongés ayant une section "de moyenne surface" avantageusement de dimensions comprises entre 20 et 30mm,
- la formation de blocs allongés par superposition desdites lanières dans une direction généralement parallèle à leur longueur, avec refroidissement des lanières en surface, avantageusement par introduction de neige carbonique,
- le tranchage des blocs dans une direction perpendiculaire à leur longueur pour détenir des feuilles ultrafines de moyenne surface,
- la restructuration en morceaux de viande par assemblage des feuilles ultrafines dans une opération de mise en forme non destructrice de la texture feuilletée.

Le terme "feuilles ultrafines" désigne ici des feuilles d'épaisseur sensiblement inférieure à 1 mm et dont une certaine proportion, au moins dans la structure, a une épaisseur comprise entre 2/10 et 5/10 mm tandis que le terme "moyenne surface" désigne des surfaces de l'ordre de quelques cm².

Pour obtenir des feuilles présentant ce niveau d'épaisseur, le demandeur proposait un appareil de tranchage des blocs faisant intervenir un disque rotatif déplacé en translation circulaire à travers le pain solidairement à un plateau circulaire tournant, les blocs étant amenés dans l'aire de tranchage par l'intermédiaire de moyens de guidage axés parallèlement à l'axe du disque rotatif.

L'opération de restructuration et de mise en forme de la viande était réalisée au moyen d'un dispositif faisant intervenir deux vis hélicoïdales d'axes parallèles, à filetage inverse l'une de l'autre et entraînés dans des sens inverses tels que les filetages s'enroulent l'un vers l'autre, ces vis débouchant dans deux buses de sortie respectives.

L'invention a plus particulièrement pour but d'améliorer le procédé précédemment évoqué de manière à obtenir des produits présentant une texture et des propriétés organoleptiques encore plus proches de celles du muscle naturel.

Elle propose à cet effet un procédé du type susdit dans lequel les feuilles ultrafines présentent une surface beaucoup plus importante, de l'ordre de 5 à 500 cm², en moyenne supérieure à 10 cm² avec une épaisseur ne dépassant pas quelques dixièmes de mm.

Il s'avère en effet qu'à la suite de la phase de restructuration de la viande, qui s'effectue sous vide, on obtient une texture bien meilleure et ce en dépit d'un préjugé qui laissait penser que compte tenu de l'action mécanique exercée par la double vis sans fin du dispositif de restructuration, la surface maximum des feuilles ne devait pas dépasser 1 à 2 cm².

Bien entendu, le problème qui se pose alors est celui de la réalisation industrielle de tranches présentant une telle surface, étant entendu que le tranchage de blocs présentant les caractéristiques de ceux précédemment évoqués, ne permet pas d'obtenir ce résultat

L'invention propose donc de remplacer la phase de fragmentation précédemment décrite par une phase de fragmentation conduisant à l'obtention de plaques de viande présentant une surface pouvant aller de 5 à 500 cm² et une épaisseur de l'ordre de 5 à 30 mm.

Il s'avère que lors de la formation des blocs à l'intérieur d'un moule dans lequel la viande fragmentée est comprimée par un piston mu par un actionneur, les plaques de viande se disposent à plat les unes contre les autres, perpendiculairement à l'axe de déplacement du piston. De ce fait, le tranchage des blocs peut être ensuite effectué parallèlement aux faces principales des plaques de viande. Les tranches obtenues seront donc de dimensions relativement importantes (la surface pouvant atteindre la surface maximum des plaques, soit environ 500 cm²).

Un mode d'exécution de l'invention sera décrit ci-après, à titre d'exemple non limitatif avec référence aux dessins annexés dans lesquels :

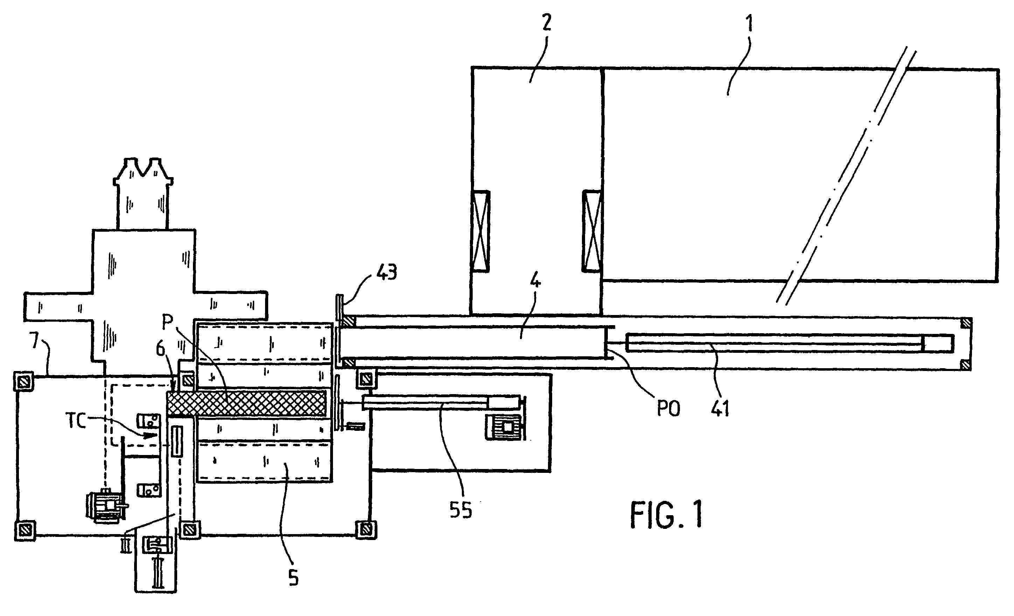

La figure 1 est une représentation schématique, vue de dessus, d'une installation de fabrication de viande feuilletée selon l'invention ;

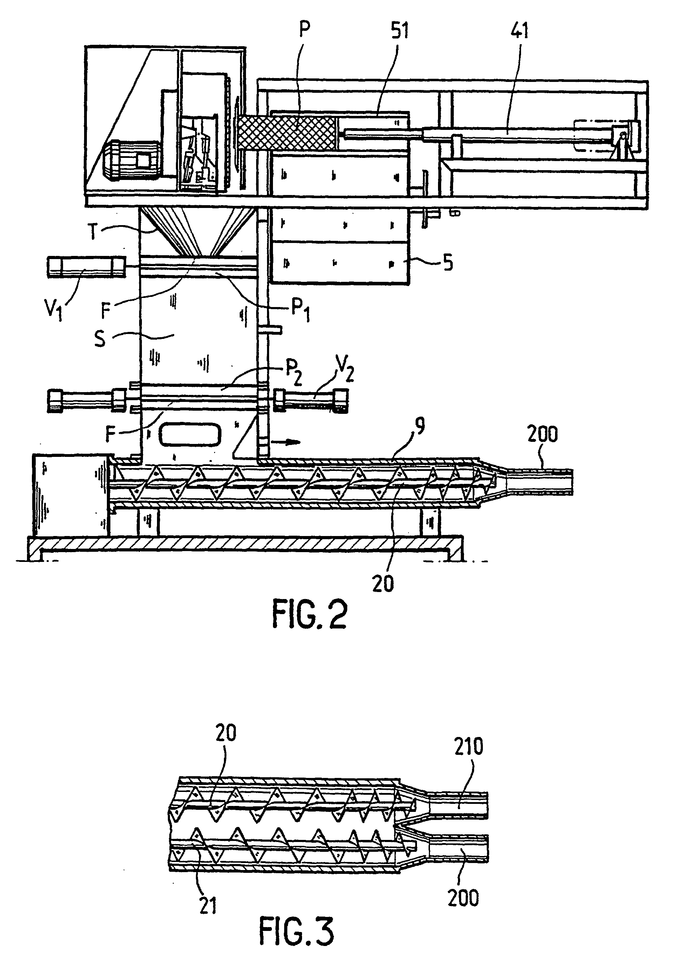

La figure 2 est une vue en élévation schématique de l'installation ;
La figure 3 est une vue en coupe axiale montrant partiellement le tunnel d'extrusion à double vis utilisé dans l'installation des figures 1 et 2.

Dans cet exemple, l'installation complète de fabrication de viande feuilletée comprend essentiellement :
- un tunnel de réfrigération 1 dans lequel circulent les morceaux de viande à traiter obtenus après fragmentation, qui se présentent sous la forme de plaques de viande,
- un élévateur 2 qui les transfère dans une trémie d'alimentation d'un moule formeur de blocs 4 muni d'un vérin hydraulique 41 ;
- un magasin à barillets 5 dans lequel la température des blocs se stabilise,
- un presseur 6 de rétention des blocs en vue de leur tranchage,
- une tête de coupe contenue dans un carter de protection (poste de tranchage 7) et comportant deux lames,
- un dispositif de distribution de liant, un sas S et un dispositif 9 de formage sous vide de la viande feuilletée à partir des feuilles coupées par la tête de coupe.

Le tunnel de réfrigération 1 est conçu de manière à assurer un refroidissement énergique, apte à refroidir rapidement la superficie des morceaux à très basse température, de l'ordre de -25°C à -35°C. Dans le cas où l'on veut obtenir des produits frais, on fera intervenir, en plus d'un froid cryogénique, un froid mécanique permettant d'assécher la surface de la viande.

Par contre, dans le cas de la production de produits surgelés, ce refroidissement pourra être assuré au moyen de neige carbonique.

L'élévateur 2 est avantageusement du type à bande transporteuse circulant en atmosphère d'anhydride carbonique.

Le moule formeur de blocs de viande est fermé, à son extrémité opposée au poussoir PO qui termine le piston du vérin 41, par une trappe 43 dont l'ouverture et la fermeture sont commandées par un vérin.

La commande du vérin 41 est effectuée de telle manière que le bloc formé entre le poussoir PO et la trappe 43 aura une longueur prédéterminée. A cet effet, après avoir comprimé une certaine quantité de viande à l'intérieur du moule 4, le vérin 41 recule d'une longueur égale à deux fois la longueur non remplie du moule, ce qui fait qu'aux allers et retours successifs du vérin effectués pour obtenir le remplissage complet du moule, des fractions décroissantes de la quantité de viande contenue dans la trémie seront poussées dans le moule. L'alimentation du moule s'effectue par l'intermédiaire d'une trémie conçue de manière à ce que chaque plaque de viande se présente sensiblement perpendiculairement à l'axe longitudinal du moule.

Après son formage, chaque bloc P est poussé par le vérin dans un premier barillet 51 du magasin 5, qui en comporte quatre, et est entraîné en rotation de façon que le bloc occupe successivement diverses positions jusqu'à son éjection de la dernière position vers la tête de coupe TC par un vérin poussoir 55.

Le temps de séjour des blocs dans le magasin est déterminé de façon à ce que la température de la viande ait le temps- de se stabiliser à une valeur comprise entre 0° et -2°C.

Le vérin poussoir 55 est commandé de manière à provoquer l'avance continue du bloc de viande qu'il éjecte du magasin à barillet 5 à faible vitesse, dans la zone de tranchage, par exemple entre 6 et 10 mm/sec.

Dans ce cas, l'avance du bloc entre deux coupes successives pourra donc être comprise entre 0,36 mm et 0,6 mm, valeurs qui correspondent à l'épaisseur de la feuille en début de coupe.

Le tranchage est obtenu au moyen d'un disque rotatif déplacé en translation circulaire à travers le bloc solidairement à un plateau circulaire tournant, le disque tournant en sens inverse du plateau.

Au sortir du poste de tranchage 7, les feuilles de viande tombent dans une trémie T dont le fond F est refermé par une porte étanche P₁ actionnée par un vérin V₁ qui commande l'entrée du sas S dans lequel est réalisé séquentiellement un vide. Le sens de rotation inversé du disque et du plateau fait en sorte que les particules de viande tombent dans la trémie T au fur et à mesure de la production des feuilles. Par contre, dans le cas où ce sens de rotation est le même, les particules sont projetées dans toutes les directions et retombent ensuite par paquets dans la trémie, nuisant ainsi à la qualité et à l'homogénéité du produit.

La sortie de ce sas S, commandée par une deuxième porte étanche P₂ commandée par un vérin V₂, donne accès au dispositif de formage sous vide 9.

Bien entendu, la commande des portes P₁, P₂ est alternée, le vide n'étant appliqué au sas S que lorsque la porte d'entrée P₁ est fermée tandis que la porte de sortie P₂ est ouverte. Grâce à cette disposition, le dispositif de formage peut fonctionner de façon pratiquement continue, étant entendu que le chargement du sas S s'effectue pendant un temps très court par rapport au temps de déchargement. De même, le dispositif de formage 9 est soumis à un vide continu.

Le dispositif de formage 9 consiste ici en un tunnel d'extrusion comprenant deux vis hélicoïdales 20, 21 axées parallèlement et distantes l'une de l'autre de manière à ce que les vis 20, 21 s'inscrivent dans des cylindres sensiblement tangents.

Ces deux vis 20, 21, dont les filetages sont inversés l'un de l'autre et sont avantageusement recouverts de "Téflon", sont entraînées par un ensemble de motorisation agencé de façon à permettre leur rotation en sens inverse l'une de l'autre en s'enroulant l'une vers l'autre vers l'intérieur de l'ensemble.

La masse de viande introduite à l'extrémité d'entrée du tunnel 9 est poussée et comprimée dans la section de sortie du tunnel où le pas des vis 20, 21 est plus réduit.

Chaque section d'extrémité du tunnel est reliée à une buse de sortie 200, 210 distincte qui comporte une portion d'entrée tronconique dans laquelle s'engage l'extrémité de diamètre décroissant de la vis 20, 21, suivi d'une portion cylindrique.

Les vis 20, 21 exercent sur la masse qu'elles transfèrent, une action d'agrégation dans laquelle les feuilles de viande se disposent selon des orientations privilégiées, la vitesse de rotation des vis (entre 50 et 300 tours/mn) demeurant faible pour préserver l'intégrité des fibres de viande. De ce fait, à la sortie de la buse 200, 210 correspondante, la texture du produit final, et en particulier l'orientation des fibres, sont proches de celles d'un muscle naturel.

Le produit se présente sous la forme d'un boudin continu qui pourra être tranché de manière à obtenir des morceaux de viande reconstituée présentant l'aspect de tournedos.

Ces morceaux pourront être vendus en tant que viande fraîche, dans les circuits de distribution traditionnels ou même être congelés.

## Revendications

1. Procédé pour la préparation d'une viande restructurée comportant les opérations successives suivantes :
- la fragmentation d'un muscle, de préférence chaud (ante rigor mortis) en morceaux,
- la formation de blocs à partir de morceaux dont la surface a été préalablement refroidie,
- le tranchage des blocs dans une direction perpendiculaire à leur longueur pour obtenir des feuilles ultrafines d'au plus quelques dixièmes de millimètres d'épaisseur,
- la restructuration en pièces de viande par assemblage de feuilles ultrafines dans une opération de mise en forme non destructrice de la texture feuilletée,
**caractérisé en ce que** les feuilles ultrafines présentent une surface de l'ordre de 5 à 500 cm², en moyenne supérieure à 10 cm², avec une épaisseur ne dépassant pas quelques dixièmes de mm.

2. Procédé selon la revendication 1,
**caractérisé en ce que** les susdits morceaux obtenus à l'issue de la phase de fragmentation présentent la forme de plaques présentant une surface pouvant aller de 5 à 500 cm² et une épaisseur de 5 à 30 mm.

3. Procédé selon la revendication 2,
**caractérisé en ce que** la formation des blocs s'effectue à l'intérieur d'un moule (4) dans lequel la viande fragmentée est comprimée par un actionneur (41).

4. Procédé selon la revendication 3,
**caractérisé en ce que** l'introduction de la viande fragmentée dans le moule (4) s'effectue de manière à ce que les plaques de viande se disposent à plat les unes contre les autres perpendiculairement à l'axe de déplacement du piston.

5. Procédé selon l'une des revendications 2 à 4,
**caractérisé en ce que** le tranchage des blocs est effectué parallèlement aux faces principales des plaques de viande.

6. Procédé selon l'une des revendications précédentes,
**caractérisé en ce que** le tranchage est obtenu au moyen d'un disque rotatif déplacé en translation circulaire à travers le bloc solidairement à un plateau circulaire tournant, le disque tournant en sens inverse du plateau.

7. Procédé selon l'une des revendications précédentes,
**caractérisé en ce qu'**après l'opération de tranchage, les feuilles tombent dans une trémie (T) dont le fond est constitué par une première porte (P₁) commandant l'entrée d'un sas (S) dans lequel est réalisé séquentiellement un vide, la sortie de ce sas (S) étant commandée par une deuxième prote (P₂) donnant accès au dispositif de formage sous vide (9).

8. Procédé selon la revendication 7,
**caractérisé en ce que** la commande des susdites portes (P₁, P₂) est alternée, le vide n'étant appliqué au sas que lorsque la porte d'entrée (P₁) est fermée tandis que la porte de sortie (P₂) est ouverte.

9. Procédé selon l'une des revendications précédentes,
**caractérisé en ce que** l'opération de formage s'effectue dans un tunnel d'extrusion comprenant au moins une vis hélicoïdale (20, 21).

10. Procédé selon la revendication 9,
**caractérisé en ce que** le tunnel d'extrusion comprend deux vis hélicoïdales (20, 21) axées parallèlement et distantes l'une de l'autre de manière à ce que les vis s'inscrivent dans des cylindres sensiblement tangents, les filetages de ces vis étant inversés l'un par rapport à l'autre.

11. Procédé selon l'une des revendications précédentes,
**caractérisé en ce que** lorsque la viande restructurée est utilisée en tant que produit frais, le refroidissement des morceaux constituant les blocs est assuré par des moyens de refroidissement mécaniques et **en ce que** lorsque la viande restructurée est congelée, ledit refroidissement peut être obtenu au moyen de neige carbonique.

## Claims

1. Method of preparing restructured meat, comprising the following successive operations:
- fragmenting a muscle, preferably hot (ante rigor mortis), into pieces,
- forming blocks from pieces, the surface of which has been previously cooled,
- slicing the blocks in a direction perpendicular to their length to obtain ultra-fine slivers which are, at most, a few tenths of a millimetre thick, and
- restructuring into pieces of meat by assembling the ultra-fine slivers in a shaping operation which does not destroy the slivered texture,
**characterised in that** the ultra-fine slivers have a surface area in the order of 5 to 500 cm², the mean surface area being greater than 10 cm², with a thickness which does not exceed a few tenths of a millimetre.

2. Method according to claim 1, **characterised in that** the above-mentioned pieces, obtained at the end of the fragmentation phase, have the configuration of slabs, which have a surface area of between 5 and 500 cm² and a thickness of between 5 and 30 mm.

3. Method according to claim 2, **characterised in that** the formation of the blocks is carried out inside a mould (4), in which the fragmented meat is compressed by an actuator (41).

4. Method according to claim 3, **characterised in that** the fragmented meat is introduced into the mould (4) so that the slabs of meat lie flat against each other and perpendicular to the axis of displacement of the piston.

5. Method according to one of claims 2 to 4, **characterised in that** the slicing of the blocks is carried out parallel to the principal faces of the slab of meat.

6. Method according to one of the preceding claims, **characterised in that** the slicing is achieved by means of a rotating disc which is displaced in a circular movement through the block jointly with a circular turntable, the disc turning in the opposite direction to the turntable.

7. Method according to one of the preceding claims, **characterised in that**, after the slicing operation, the slivers fall into a hopper (T), the base of which is formed by a first door (P₁) controlling the inlet to a chamber (S), in which a vacuum is sequentially produced, the outlet from this chamber (S) being controlled by a second door (P₂) giving access to the device (9), which effects shaping in a vacuum.

8. Method according to claim 7, **characterised in that** the control of the above-mentioned doors (P₁, P₂) is alternate, the vacuum only being applied to the chamber when the inlet door (P₁) is closed while the outlet door (P₂) is open.

9. Method according to one of the preceding claims, **characterised in that** the shaping operation is carried out in an extrusion tunnel comprising at least one helical screw (20, 21).

10. Method according to claim 9, **characterised in that** the extrusion tunnel comprises two helical screws (20, 21), the axes of which are parallel to and remote from each other so that the screws are aligned in substantially tangential cylinders, the threads of these screws being opposite to each other.

11. Method according to one of the preceding claims, **characterised in that**, when the restructured meat is used as a fresh product, the cooling of the pieces making up the blocks is ensured by mechanical cooling means, and **in that**, when the restructured meat is frozen, said cooling may be achieved by means of carbonic acid ["snow"].

## Patentansprüche

1. Verfahren zur Herstellung eines umstrukturierten Fleisches mit den folgenden aufeinanderfolgenden Arbeitsgängen:
- das Zerkleinern eines vorzugsweise warmen (ante rigor mortis) Muskels in Stücke,
- die Bildung von Blöcken ausgehend von den Stücken, deren Oberfläche zuvor gekühlt worden ist,
- das Schneiden der Blöcke in einer Richtung, die senkrecht zu ihrer Länge ist, um ultrafeine Scheiben mit einer Dicke von höchstens einigen Zehntel mm zu erhalten,
- die Umstrukturierung in Fleischteile durch Zusammensetzen der ultrafeinen Scheiben in einem Formgebungsarbeitsgang, der für die scheibenartige Textur nicht destruktiv ist,
**dadurch gekennzeichnet, daß** die ultrafeinen Scheiben eine Oberfläche in der Größenordnung von 5 bis 500 cm², im Mittel von mehr als 10 cm², aufweisen mit einer Dikke, die einige Zehntel mm nicht überschreitet.

2. Verfahren nach Anspruch 1,
**dadurch gekennzeichnet, daß** die oben genannten Stücke, die in der Zerkleinerungsphase erhalten werden, die Form von Platten aufweisen, die eine Oberfläche aufweist, die von 5 bis 500 cm² gehen kann, und eine Dicke aufweisen, die von 5 bis 30 mm gehen kann.

3. Verfahren nach Anspruch 2,
**dadurch gekennzeichnet, daß** die Bildung der Blöcke sich im Inneren einer Form (4) vollzieht, in der das zerkleinerte Fleisch durch ein Betätigungsgerät (41) komprimiert wird.

4. Verfahren nach Anspruch 3,
**dadurch gekennzeichnet, daß** das Einführen des zerkleinerten Fleisches in die Form (4) sich derart vollzieht, daß sich die Fleischplatten flach aneinander anlegen senkrecht zur Achse der Verschiebung des Kolbens.

5. Verfahren nach einem der Ansprüche 2 bis 4,
**dadurch gekennzeichnet, daß** das Schneiden der Blöcke sich parallel zu den Hauptflächen der Fleischplatten vollzieht.

6. Verfahren nach einem der vorhergehenden Ansprüche,
**dadurch gekennzeichnet, daß** sich das Schneiden mittels einer drehbaren Scheibe vollzieht, die in einer Kreisverschiebung durch den Block verschoben wird, der mit einer runden, sich drehenden Platte verbunden ist, wobei sich die Scheibe in umgekehrter Richtung dreht wie die Platte.

7. Verfahren nach einem der vorhergehenden Ansprüche,
**dadurch gekennzeichnet, daß** die Scheiben nach dem Arbeitsschritt des Schneidens in einen Behälter (T) fallen, dessen Boden durch eine erste Tür (P₁) gebildet ist, die den Eintritt in eine Schleuse (S) steuert, in der sequenziell ein Vakuum realisiert wird, wobei der Austritt aus der Schleuse durch eine zweite Tür (P₂) gesteuert wird, die einen Zugang zu der Vorrichtung zum Formen unter Vakuum (9) gewährt.

8. Verfahren nach Anspruch 7,
**dadurch gekennzeichnet, daß** die Steuerung der genannten Türen (P₁, P₂) alterniert wird, wobei das Vakuum nur dann in der Schleuse gebildet wird, wenn die Eintrittstür (P₁) geschlossen ist, während die Ausgangstür (P₂) geöffnet ist.

9. Verfahren nach einem der vorhergehenden Ansprüche,
**dadurch gekennzeichnet, daß** der Arbeitsgang des Formens sich in einem Extrusionstunnel vollzieht, der wenigstens eine spiralförmige Schraube (20, 21) aufweist.

10. Verfahren nach Anspruch 9,
**dadurch gekennzeichnet, daß** der Extrusionstunnel (2) spiralförmige Schrauben (20, 21) aufweist, die mit parallelen Achsen und zueinander beabstandet angeordnet sind, derart, daß die Schrauben Zylinder beschreiben, die sich etwa berühren, wobei die Gewinde dieser Schrauben zueinander invertiert sind.

11. Verfahren nach einem der vorhergehenden Ansprüche,
**dadurch gekennzeichnet, daß** dann, wenn das umstrukturierte Fleisch als frisches Produkt benutzt wird, das Kühlen der Stücke, die die Blöcke bilden, durch mechanische Kühlmittel sichergestellt wird, und daß dann, wenn das umstrukturierte Fleisch eingefroren wird, die genannte Abkühlung durch Trockeneis erhalten wird.
